# EUROPÄISCHE PATENTANMELDUNG

(11) **EP 2 505 113 A2**
(43) Veröffentlichungstag der Anmeldung: **03.10.2012**
(21) Anmeldenummer: 12154592.5
(22) Anmeldetag: 09.02.2012
(51) Int. Cl.: A47L 9/10, B01D 46/00

(54) **Staubsauger mit Filter-Halteeinrichtung**

(30) Priorität: 31.03.2011 DE 102011006584
(71) Anmelder: HILTI Aktiengesellschaft, 9494 Schaan (LI)
(72) Erfinder: Huber, Franz, 86865 Markt Wald (DE); Günther, Joachim, Dr., 86916 Kaufering (DE)

(57) **Zusammenfassung**

Staubsauger (11) mit einem Gehäuse (12), mit einem Filterelement (31) zur Abscheidung von angesaugten, in einem Luftstrom (L) transportierten Partikeln (13), sowie mit einer Halteeinrichtung (41,51,61) zum Halten des Filterelementes (31) im Gehäuse (12). Das Filterelement (31) weist zumindest einen abragenden Halteabschnitt (34) auf. Die Halteeinrichtung (41,51,61) weist eine Auflagefläche (42,52,62) und eine Haltefläche (47,57,67) auf, zwischen denen im angeordneten Zustand des Filterelementes (31) dessen Halteabschnitt (34) zu liegen kommt. Die Auflagefläche (42,52,62) und die Haltefläche (47,57,67) der Halteeinrichtung (41,51,61) sind jeweils mit einer definierten Unebenheit (43,48,53,71) versehen.

## Beschreibung

Die Erfindung bezieht sich auf einen Staubsauger, der im Oberbegriff des Anspruchs 1 genannten Art.

Staubsauger dienen dem Aufsaugen von unterschiedlichsten Materialien. Neben Staubsaugern für trockene Materialien sind auch Staubsauger zum Aufsaugen von Flüssigkeiten bekannt. Derartige Staubsauger werden üblicherweise als Nass-/Trockensauger bezeichnet.

Staubsauger weisen z. B. ein Gebläse oder eine Saugturbine als Unterdruckerzeuger auf, der einen entlang eines Strömungsverlaufs im Gehäuse verlaufenden Luftstrom erzeugt. Luft wird von dem Unterdruckerzeuger z. B. durch einen an einer Ansaugöffnung des Gehäuses angeordneten Saugschlauch in das Gehäuse angesaugt und anschliessend durch eine von der Ansaugöffnung beabstandete, am Gehäuse vorgesehene Ausblasöffnung wieder aus dem Gehäuse ausgeblasen. Der Bereich des Strömungsverlaufs zwischen der Ansaugöffnung und dem Unterdruckerzeuger wird als der saugseitige Bereich des Staubsaugers bezeichnet. Der Bereich des Strömungsverlaufs zwischen dem Unterdruckerzeuger und der Ausblasöffnung wird als der überdruckseitige Bereich des Staubsaugers bezeichnet. Um den Unterdruckerzeuger sowie die Umgebung vor mit dem Luftstrom transportierten Partikeln zu schützen, wird normalerweise zumindest ein Filterelement vor dem Unterdruckerzeuger und somit saugseitig des Unterdruckerzeugers vorgesehen.

Aus der US 2010/0139032 A1 ist ein Staubsauger bekannt, der ein Gehäuse, ein Filterelement zur Abscheidung von angesaugten, in einem Luftstrom transportierten Partikeln sowie eine Halteeinrichtung zum Halten des Filterelementes im Gehäuse aufweist. Das Filterelement weist einen abragenden Halteabschnitt auf. Die Halteeinrichtung umfasst ein das Filterelement umgebendes, vom Luftstrom durchströmbares Gehäuse sowie eine Auflagefläche und eine Haltefläche, zwischen denen im angeordneten Zustand des Filterelementes der Halteabschnitt des Filterelementes zu liegen kommt.

Die meisten auf dem Markt erhältlichen Filterelemente werden in Grossserien für mehrere Anwendungen und entsprechende Kundenbedürfnisse hergestellt. Diese Filterelemente weisen einen Filterstoff, der die eigentliche Filteraufgabe übernimmt und z. B. aus Kunstfasern oder aus Naturprodukten hergestellt ist, und ein Trägermaterial auf, das die tragenden sowie formhaltenden Funktion übernimmt und zumeist aus einem weichen, meist geschäumten Material gefertigt ist. Insbesondere das Trägermaterial unterliegt den Herstellertoleranzen in Form sowie Lage. Zudem ändern sich über die Zeit die Eigenschaften des Trägermaterials, insbesondre in Bezug auf dessen Materialhärte. Neben der tragenden Funktion weist das in der Halteeinrichtung festgelegte Trägermaterial auch eine Abdichtfunktion auf, so dass das im Gehäuse angeordnete Filterelement zum umgrenzenden Unterdruckraum abgedichtet ist. Nur eine nahezu zu 100% funktionierende Abdichtung gewährleistet einen optimalen Saugennrirkungsgrad des Staubsaugers.

Nach einer gewissen Nutzungsdauer setzen sich die Filterelemente aufgrund der abgeschiedenen Partikel zu. Als Folge davon reduziert sich die für den Durchtritt des Luftstroms zur Verfügung stehende Fläche, was den Saugwirkungsgrad des Staubsaugers massgeblich herabsetzt. Um ein zugesetztes Filterelement nicht immer auswechseln zu müssen, sind Staubsauger mit automatischen Filterabreinigungssystemen bekannt. Ein automatisches Filterabreinigungssystem umfasst beispielsweise eine mechanische oder pneumatische Vorrichtung, welche z. B. mit gezielten Luftstössen das Filterelement bei Bedarf abreinigt. Die vom Filterelement abgelösten Partikel fallen in den Auffang- oder Sammelbehälter des Staubsaugers und das Filterelement kann seine Filterfunktion ohne massgeblichen Einfluss auf den Saugerwirkungsgrad des Staubsaugers wieder wahrnehmen.

Daher muss ein Filterelement und insbesondere dessen Trägermaterial hohe Anforderungen in Bezug auf die mechanische Belastbarkeit erfüllen, da ansonsten die gewünschte Dichtigkeit und Lagestabilität des Filterelementes nicht gegeben ist.

Nachteilig an den bekannten Lösungen ist, dass beim Abreinigen des Filterelementes durch ein automatisches Filterabreinigungssystem das Filterelement in den Unterdruckraum gezogen werden kann und dadurch im erneuten Betrieb des Staubsaugers keine oder nur eine beschränkte Filterreinigung gegeben ist. Zudem können durch das nicht mehr ausreichend fixierte Filterelement Störungen beim Betrieb des Staubsaugers auftreten. Masstoleranzen, aber vor allem Härtetoleranzen des Trägermaterials führen bisher oftmals zu Dichtigkeitsproblem, besonders wenn aufgrund automatischer Filterreinigungssysteme zusätzliche Belastungen auf die Verbindung zwischen dem Filterelement und der Halteeinrichtung wirken.

Aufgabe der Erfindung ist es, einen Staubsauger zu schaffen, der insbesondere die vorgenannten Nachteile nicht aufweist sowie eine einfache, flexible und sichere Festlegung des Filterelementes im Staubsauger ermöglicht. Weiter soll die Festlegung des Filterelementes im oder am Gehäuse des Staubsaugers konstruktiv einfach sein.

Diese Aufgaben sind durch die Merkmale der unabhängigen Ansprüche gelöst. Vorteilhafte Weiterbildungen sind in den Figuren und in den abhängigen Patentansprüchen dargelegt.

Gemäss der Erfindung ist zumindest die Auflagefläche und/oder die Haltefläche der Halteeinrichtung mit zumindest einer definierten Unebenheit versehen.

Damit ist die wirksame Oberfläche zwischen der Auflagefläche und/oder der Haltefläche der Halteeinrichtung und dem Bereich des Halteabschnitts des Trägermaterials erhöht, der mit der entsprechenden Fläche der Halteeinrichtung in Anlage kommt. Zudem wirken im festgelegten Zustand des Filterelementes aufgrund der definierten Unebenheit zusätzliche Druckkräfte auf das Trägermaterial, so dass sich höhere Haltekräfte realisieren lassen und dadurch die Klemmung des Filterelementes zusätzlich erhöht ist.

Mit der erfindungsgemässen Ausführungsform der Halteeinrichtung wird ein Filterelement stabil gehalten. Zudem wird sichergestellt, dass auch bei automatischen Filterabreinigungssystemen das Filterelement an seinem vorbestimmten Platz verbleibt. Das Filterelement ist unabhängig von den Toleranzschwankungen des Trägermaterials oder unabhängig der sich über die Zeit ändernden Verformungseigenschaften des Trägermaterials sicher festlegbar. Weiter wird durch die definierte Unebenheit bei der Anordnung des Filterelementes eine ausreichende Verformung des Trägermaterials gewährleistet, so dass eine ausreichend dichte Abdichtung des Filterelementes im festgelegten Zustand gegeben ist.

Vorzugsweise sind die Auflagefläche und die Haltefläche der Halteeinrichtung jeweils mit zumindest einer definierten Unebenheit versehen, womit der Bereich des Halteabschnitts des Trägermaterials, der mit den beiden Flächen der Halteeinrichtung in Anlage kommt, von zwei Seiten her gehalten wird. Dadurch ist das Filterelement noch sicherer festlegbar und die Abdichtungsfunktion des Filterelementes zusätzlich verbessert.

Die definierte Unebenheit kann als separates Element ausgebildet sein oder in die Auflage- und/oder Haltefläche integriert sein. Die Halteeinrichtung ist beispielsweise aus Kunststoff gefertigt und die definierte Unebenheit der Auflagefläche und/oder der Haltefläche wird mit Hilfe von Erodierverfahren an der Oberfläche erzeugt. Die Richtlinie VDI 3400 definiert die Rauheit von Kunststoffen. Vorteilhaft liegt die Rauheit der Auflagefläche und/oder der Haltefläche der Halteeinrichtung im Bereich von Ref. 35 bis Ref. 45 nach VDI 3400.

Bevorzugt ist die definierte Unebenheit an der Auflagefläche und an der Haltefläche der Halteeinrichtung gleichartig ausgebildet, was eine einfache Herstellung der Halteeinrichtung ermöglicht.

Alternativ ist die definierte Unebenheit an der Auflagefläche und an der Haltefläche der Halteeinrichtung ungleichartig, d. h. unterschiedlich ausgebildet. Dabei werden die definierten Unebenheiten vorteilhaft derart aufeinander abgestimmt ausgebildet, dass die resultierenden Haltekräfte an beiden Flächen der Halteeinrichtung sich summieren und somit eine sichere Fixierung sowie Abdichtung des Filterelementes auch unter hohen mechanischen und/oder pneumatischen Belastungen gewährleistet ist.

Vorzugsweise ist die Halteeinrichtung an einen von dem Luftstrom durchströmten, umfänglich geschlossenen Gehäuseabschnitt vorgesehen und zumindest die Auflagefläche umgibt diesen Gehäuseabschnitt entlang dessen Umfang, wobei die einzelnen Abschnitte der Auflagefläche jeweils eine entlang der Innenöffnung des Gehäuseabschnitts verlaufende Längserstreckung aufweisen. Dadurch wird eine umlaufende Abdichtung entlang des Umfangs des Filterelementes sichergestellt. Der vorgenannte Gehäuseabschnitt bildet vorteilhaft einen Abschnitt eines Kanals mit entsprechenden Seitenabschnitten aus.

Vorteilhaft umgibt auch die Haltefläche der Halteeinrichtung den Gehäuseabschnitt entlang des Umfangs, so dass das Trägermaterial von zwei Seiten her sicher in der Halteeinrichtung fixiert wird.

Bevorzugt ist die definierte Unebenheit der Auflagefläche und/oder der Haltefläche der Halteeinrichtung durch zumindest eine Erhebung gebildet. Die zumindest eine Erhebung schafft eine sogenannte Berg- und Tal-Geometrie, so dass auf das Trägermaterial des Filterelementes, wenn dieses von der Halteeinrichtung gehalten ist, hohe Klemm- bzw. Presskräfte wirken.

Vorzugsweise umfasst die zumindest eine Erhebung wenigstens eine Rippe, wodurch eine vorteilhafte Berg- und Tal-Geometrie im Kontaktbereich zwischen der entsprechenden Fläche der Halteeinrichtung und dem entsprechenden Bereich des Trägermaterials des Filterelementes geschaffen wird.

Vorteilhaft ist die wenigstens eine Rippe entlang der Längserstreckung der Auflagefläche ausgerichtet, womit auf der gesamten Länge der Auflagefläche eine bevorzugte Fixierung und Abdichtung des Filterelementes gegeben ist.

Bevorzugt umfasst die zumindest eine Erhebung mehrere Rippen, womit eine noch vorteilhaftere Berg- und Tal-Geometrie im Kontaktbereich zwischen der entsprechenden Fläche der Halteeinrichtung und dem entsprechenden Bereich des Trägermaterials des Filterelementes geschaffen wird.

Die mehreren Rippen sind vorzugsweise in einem Winkel zur Längserstreckung der Auflagefläche ausgerichtet, wobei der Winkel zu dieser Längserstreckung vorteilhaft 1 ° bis 89° und besonders vorteilhaft 40° bis 50° beträgt. Diese Lösung ist besonders dadurch vorteilhaft, weil die im Betrieb des Staubsaugers auf das Filterelement wirkenden Kräfte üblicherweise normal zu der Längserstreckung der Auflagefläche wirken. Aufgrund der schräg verlaufenden Rippen werden diese Kräfte umgelenkt und somit in kleinere Kraftkomponenten aufgeteilt. Dies führt dazu, dass bereits Erhebungen geringer Grösse ausreichen, um das Filterelement in den im Betrieb des Staubsaugers anfallenden Belastungszuständen ausreichend sicher zu halten.

Vorzugsweise sind eine erste Gruppe von Rippen, die in einer ersten Richtung ausgerichtet sind, und eine zweite Gruppe von Rippen vorgesehen, die in eine zweite, von der ersten Richtung verschiedenen Richtung ausgerichtet sind, womit eine weitere Art einer vorteilhaften Berg- und Tal-Geometrie im Kontaktbereich zwischen der entsprechenden Fläche der Halteeinrichtung und dem entsprechenden Bereich des Trägermaterials des Filterelementes geschaffen wird. Besonders vorteilhaft sind die Rippen der einzelnen Gruppen derart zueinander ausgerichtet, dass diese sich im Bereich der entsprechenden Fläche der Halteeinrichtung überkreuzen beziehungsweise schneiden.

Vorteilhaft weisen alle Rippen einer Gruppe die gleiche Erstreckung über die entsprechende Fläche der Halteeinrichtung auf. Besonders vorteilhaft weisen alle Rippen beider Gruppen die gleiche Erstreckung über die entsprechende Fläche der Halteeinrichtung auf.

Bevorzugt verlaufen die einzelnen Rippen parallel zueinander, so dass eine vorteilhafte Berg- und Tal-Geometrie mit gleichmässig grossem Platz zwischen den Erhebungen bzw. Rippen gegeben ist.

In einer bevorzugten Variante ist die definierte Unebenheit der Auflagefläche und/oder der Haltefläche der Halteeinrichtung durch mehrere Erhebungen gebildet ist, welche als separate, diskrete Elemente ausgebildet sind. Diese separaten Elemente sind verteilt entlang der entsprechenden Fläche der Halteeinrichtung angeordnet und dringen punktuell in das Trägermaterial des Filterelementes ein, wenn dieses in der Halteeinrichtung festgelegt wird. Vorzugsweise sind die separaten, diskreten Elemente entlang der Auflagefläche und/oder der Haltefläche der Halteeinrichtung in einem gleichmässigen Raster angeordnet, so dass das Filterelement sicher in der Halteeinrichtung gehalten ist.

Bevorzugt weisen die separaten, diskreten Elemente eine teilkugelige, zylinderförmige, keglige und/oder kegelstumpfförmige Ausgestaltung auf, womit die Art des Eindringens dieser separaten Elemente in das Trägermaterial des Filterelementes in der Art des Trägermaterials vorteilhaften Weise erfolgt.

In einer weiteren bevorzugten Variante ist die definierte Unebenheit durch eine Rauheit der Auflagefläche und/oder der Haltefläche gebildet. Die Rauheit erhöht die unter Belastung des Filterelementes wirkende Reibung zwischen der entsprechenden Fläche der Halteeinrichtung und dem Trägermaterial des Filterelementes. Vorteilhaft entspricht die Rauheit einer Schleifpapierkörnung von 6 bis 450, besonders vorteilhaft einer Schleifpapierkörnung von 40 bis 150 und ganz besonders vorteilhaft einer Schleifpapierkörnung von 80. Dabei entspricht die Körnungsangabe dem Standard des Coated Abrasive Manufacturing Institute (CAMI).

In einer anderen vorteilhaften Variante ist ein separates Unebenheitselement vorgesehen, das an zumindest einer Seite die definierte Unebenheit aufweist und an der Auflagefläche und/oder an der Haltefläche der Halteeinrichtung festlegbar ist, womit auch bei bereits auf dem Markt erhältlichen beziehungsweise im Einsatz befindlichen Staubsaugern eine Nachrüstung der Halteeinrichtung erfolgen kann. Vorteilhaft ist an dem separaten Unebenheitselement an den Abschnitten, welche mit der entsprechenden Fläche der Halteeinrichtung in Anlage kommen, eine Schicht eines Klebers vorgesehen. Der Kleber ist vorteilhaft mit einer entfernbaren Abdeckfolie versehen, welche diese bis zur Anordnung des separaten Unebenheitselement an der entsprechenden Fläche der Halteeinrichtung, während der Lagerung sowie während des Transportes schützt.

Je nach Art des Trägermaterials und insbesondere in Abhängigkeit von dessen Verformungseigenschaften können unterschiedliche Ausgestaltungen der Erhebungen eine vorteilhafte Fixierung des Filterelementes und eine sichere Abdichtung desselben gewährleisten. Dabei können verschiedene Ausgestaltungen von Erhebungen gegebenenfalls miteinander kombiniert werden.

Vorzugsweise weist der Staubsauger einen Aufnahmebehälter zur Aufnahme und zumindest temporären Lagerung der angesaugten Partikel sowie einen auf dem Aufnahmebehälter anordnenbaren Saugkopf auf, wobei die Auflagefläche der Halteeinrichtung an dem Aufnahmebehälter und die Haltefläche der Halteeinrichtung an dem Saugkopf vorgesehen sind. Alternativ ist die Haltefläche der Halteeinrichtung an dem Aufnahmebehälter und die Auflagefläche der Halteeinrichtung an dem Saugkopf vorgesehen. Vorteilhaft ist zur Sicherung des Saugkopfs an dem Aufnahmebehälter ein Verriegelungsmechanismus vorgesehen, der beim Festlegen des Saugkopfs diesen an den Aufnahmebehälter hält. Dabei wird in vorteilhafter Weise gleichzeitig der entsprechende Abschnitt des Trägermaterials des Filterelementes zwischen der Auflagefläche und der Haltefläche der Halteeinrichtung eingeklemmt und das Filterelement fixiert. Zudem gewährleistet diese Ausgestaltung der Erfindung eine einfache Zugänglichkeit des Filterelementes, wenn der Saugkopf von dem Aufnahmebehälter gelöst wird.

Anhand von Figuren wird die Erfindung symbolisch und beispielhaft näher erläutert.

Die Figuren werden zusammenhängend und übergreifend beschrieben. Gleiche Bezugszeichen bedeuten gleiche Bauteile.

Es zeigen dabei:
- Fig. 1: einen Staubsauger in einer perspektivischen Ansicht;
- Fig. 2: den Staubsauger gemäss Fig. 1 in einem schematischen Querschnitt;
- Fign. 3 A, B: ein erstes Beispiel einer Halteeinrichtung gemäss Detail A in Fig. 2, jeweils als Ausschnitt in einem Querschnitt (Fig. 3A) und in einer Aufsicht (Fig. 3B);
- Fign. 4 A, B: ein zweites Beispiel einer Halteeinrichtung, jeweils als Ausschnitt in einem Querschnitt (Fig. 4A) und in einer Aufsicht (Fig. 4B);
- Fign. 5 A, B: ein drittes Beispiel einer Halteeinrichtung, jeweils als Ausschnitt in einem Querschnitt (Fig. 5A) und in einer Aufsicht (Fig. 5B);
- Fig. 5 C: das separate Unebenheitselement in einem Detailschnitt;
- Fign. 6 A, B: ein viertes Beispiel einer Halteeinrichtung, jeweils als Ausschnitt in einem Querschnitt (Fig. 6A) und in einer Aufsicht (Fig. 6B);
- Fign. 7 A, B: ein fünftes Beispiel einer Halteeinrichtung, jeweils als Ausschnitt in einem Querschnitt (Fig. 7A) und in einer Aufsicht (Fig. 7B);
- Fign. 8 A, B: ein sechstes Beispiel einer Halteeinrichtung, jeweils als Ausschnitt in einem Querschnitt (Fig. 8A) und in einer Aufsicht (Fig. 8B);
- Fign. 9 A, B: ein siebtes Beispiel einer Halteeinrichtung, jeweils als Ausschnitt in einem Querschnitt (Fig. 9A) und in einer Aufsicht (Fig. 9B).

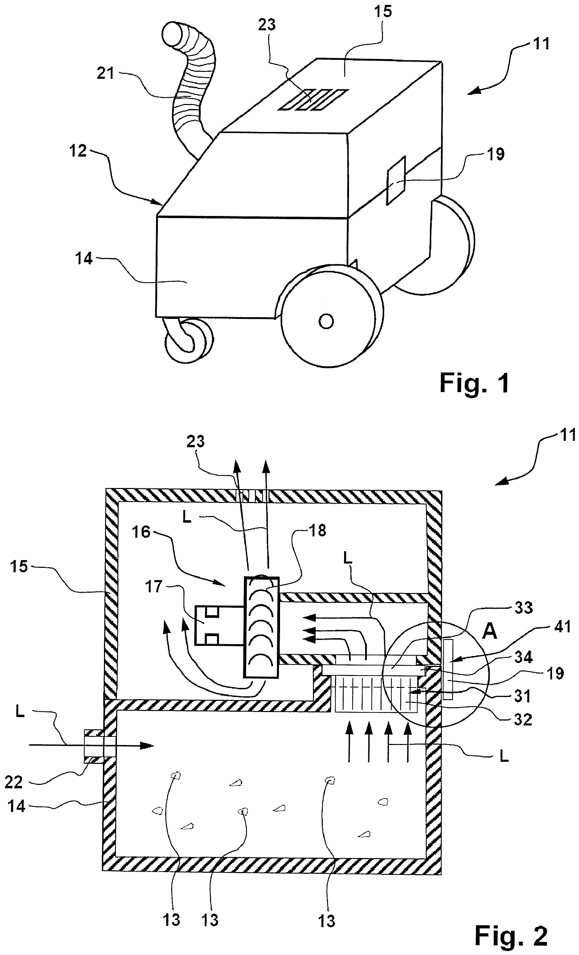

Der in den Figuren 1 und 2 dargestellte Staubsauger 11 weist ein Gehäuse 12 auf. Der Staubsauger 11 umfasst einen Auffangbehälter 14, in dem eingesaugte Partikel 13 aufgefangen werden, sowie einen Saugkopf 15, in dem ein Unterdruckerzeuger 16 als Saugquelle vorgesehen ist. Der Saugkopf 15 ist mit dem Auffangbehälter 14 derart verbunden, dass nach dem Entriegeln eines Verriegelungsmechanismus 19 der Saugkopf 15 vom Auffangbehälter 14 entfernt werden kann. Der Unterdruckerzeuger 16 umfasst beispielsweise einen von einem Motor 17 angetriebenen Ventilator 18.

Der von dem Unterdruckerzeuger 16 erzeugte Luftstrom L strömt durch einen Saugschlauch 21, der an einer am Gehäuse 12 vorgesehenen Ansaugöffnung 22 angeschlossen ist, durch den Auffangbehälter 14, anschliessend durch ein dem Unterdruckerzeuger 16 in Bezug auf den Strömungsverlauf des Luftstroms L vorgeschaltetes und somit saugseitig angeordnetes Filterelement 31 und dann durch am Saugkopf 15 angeordnete Austrittsöffnungen 23 in die Umgebung. Die Austrittsöffnungen 23 sind zu der Ansaugöffnung 22 beabstandet, wobei der Strömungspfad von der Ansaugöffnung 22 zu den Austrittsöffnungen 23 verläuft. Die Saugöffnung kann alternativ im Saugkopf 15 vorgesehen sein. Der Luftstrom L strömt über einen Leitungsabschnitt in den Auffangbehälter 14.

Der Unterdruckerzeuger 16 wird bei dem hier dargestellten Staubsauger 11 beispielsweise über eine mit dem Stromnetz verbindbare Stromleitung mit elektrischer Energie versorgt. Alternativ oder ergänzend dazu kann der Staubsauger 11 auch beispielsweise über im Staubsauger 11 angeordnete Akkupakete mit der für den Betrieb erforderlichen Energie versorgt werden.

Das Filterelement 31 dient der Abscheidung von angesaugten, im Luftstrom L transportierten Staubpartikeln 13 und weist einen Filterstoff 32 sowie ein Trägermaterial 33 auf, wobei das Trägermaterial 33 einen abragenden Halteabschnitt 34 zur Festlegung des Filterelementes 31 aufweist.

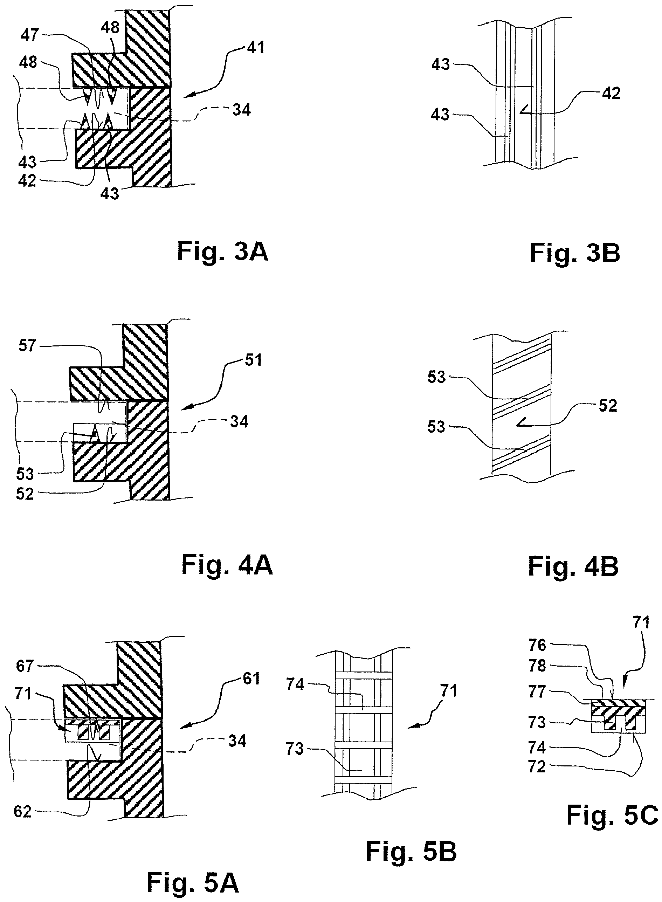

Zum Halten des Filterelementes 31 im Gehäuse 12 ist eine Halteeinrichtung 41 vorgesehen, die in Figuren 3A und B im Detail dargestellt ist. Die Halteeinrichtung 41 weist eine Auflagefläche 42 und eine Haltefläche 47 auf, zwischen denen im angeordneten Zustand des Filterelementes 31 der Halteabschnitt 34 des Filterelementes 31 zu liegen kommt.

Die Auflagefläche 42 und die Haltefläche 47 der Halteeinrichtung 41 sind mit einer definierten Unebenheit versehen. Im ersten Ausführungsbeispiel ist die definierte Unebenheit an der Auflagefläche 42 und an der Haltefläche 47 der Halteeinrichtung 41 gleichartig ausgebildet.

Die Halteeinrichtung 41 ist an einen von dem Luftstrom L durchströmten, umfänglich geschlossenen Gehäuseabschnitt 24 vorgesehen, wobei die Auflagefläche 42 und die Haltefläche 47 diesen Gehäuseabschnitt 24 entlang dessen Umfang umgeben. Die einzelnen Abschnitte der Auflagefläche 42 beziehungsweise der Haltefläche 47 weisen jeweils eine entlang der Innenöffnung des Gehäuseabschnitts 24 verlaufende Längserstreckung auf.

Die definierte Unebenheit der Auflagefläche 42 und der Haltefläche 47 der Halteeinrichtung 41 ist jeweils durch Erhebungen in Form von mehreren Rippen 43 bzw. 48 gebildet. Die Rippen 43 bzw. 48 sind jeweils entlang der Längserstreckung der entsprechenden Fläche 42 bzw. 47 der Halteeinrichtung 41 ausgerichtet. Die einzelnen Rippen 43 bzw. 48 verlaufen jeweils parallel zueinander. Die Auflagefläche 42 und die Rippen 43 bzw. die Auflagefläche 47 und die Rippen 48 sind jeweils einteilig ausgebildet.

Nach dem Einlegen eines Filterelementes 31 in den Staubsauger 11 wird der Saugkopf 15 auf den Auffangbehälter 14 aufgesetzt und mittels des Verriegelungsmechanismus 19 an den Auffangbehälter 14 angepresst. Dabei greifen die Rippen 43 und 48 in den Halteabschnitt 34 des Trägermaterials 33 ein, so dass das Filterelement 31 sicher in der Halteeinrichtung 31 gehalten ist.

Bei der in den Figuren 4A und 4B dargestellten Variante der Halteeinrichtung 51 weist die Auflagefläche 52 eine definierte Unebenheit in Form von mehreren Rippen 53 auf, welche parallel zueinander und in einem Winkel von 40° bis 50° zur Längserstreckung der Auflagefläche 52 ausgerichtet sind. An der Haltefläche 57 ist in diesem Ausführungsbeispiel keine definierte Unebenheit vorgesehen. Es ist jedoch denkbar, auch die Haltefläche 57 mit einer definierten Unebenheit zu versehen, wobei diese gleichartig oder ungleichartig zu der Ausgestaltung der definierten Unebenheit der Auflagefläche 52 ausgebildet sein kann.

Bei einer weiteren Variante der Halteeinrichtung 61, wie sie in den Figuren 5A bis 5C dargestellt ist, ist jeweils ein separates, an der Haltefläche 67 der Halteeinrichtung 61 festlegbares Unebenheitselement 71 vorgesehen. An der Auflagefläche 62 ist in diesem Ausführungsbeispiel keine definierte Unebenheit vorgesehen. Es ist jedoch denkbar, auch die Auflagefläche 62 mit einer definierten Unebenheit zu versehen, wobei diese gleichartig oder ungleichartig zu der Ausgestaltung der definierten Unebenheit der Haltefläche 67 ausgebildet sein kann.

An einer ersten Seite 72 weist das separate Unebenheitselement 71 eine erste Gruppe von Rippen 73, die in eine erste Richtung, hier parallel zu der Längserstreckung des separaten Unebenheitselementes 71 ausgerichtet sind, und eine zweite Gruppe von Rippen 74 auf, die in eine zweite, von der ersten Richtung verschiedenen Richtung, hier quer zu der Längserstreckung des separaten Unebenheitselementes 71 ausgerichtet sind, wobei die Rippen 73 und 74 zusammen die definierte Unebenheit bilden. Die Rippen 73 weisen in diesem Ausführungsbeispiel in Bezug auf die Auflagefläche 62 gegenüber den Rippen 74 eine geringere Höhe auf.

An einer zweiten Seite 76, die der ersten Seite 72 mit der definierten Unebenheit gegenüberliegt, ist eine Klebeschicht 77 vorgesehen, die bis zur Anordnung des separaten Unebenheitselementes 71 mit einer entfernbaren Abdeckfolie 78 versehen ist (Figur 5C). Das separate Unebenheitselement 71 wird nach dem Entfernen der Abdeckfolie 78 an der Auflagefläche 62 und an der Haltefläche 67 der Halteeinrichtung 61 festgelegt und ermöglicht somit, auch bestehende Staubsauger, welche bereits eine Halteeinrichtung für ein Filterelement 31 aufweisen, mit der Erfindung nachzurüsten.

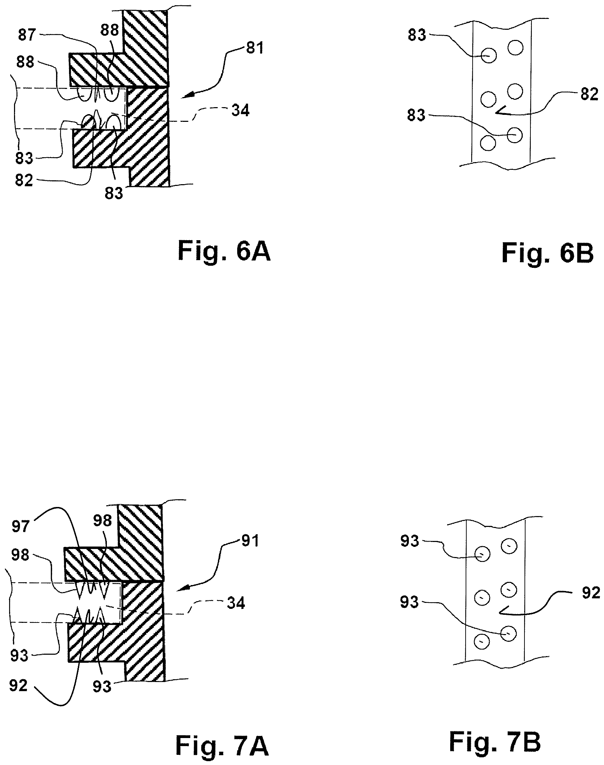

Bei der in den Figuren 6A und 6B dargestellten Variante der Halteeinrichtung 81 ist die definierte Unebenheit der Auflagefläche 82 und der Haltefläche 87 der Halteeinrichtung 81 durch mehrere Erhebungen gebildet, welche als separate, diskrete Elemente 83 bzw. 88 ausgebildet sind. Die separaten, diskreten Elemente 83 bzw. 88 sind entlang der Auflagefläche 82 und der Haltefläche 87 der Halteeinrichtung 81 in einem gleichmässigen Raster angeordnet und weisen eine teilkugelige Ausgestaltung auf.

Im Gegensatz dazu ist bei der Variante der Halteeinrichtung 91 gemäss den Figuren 7A und 7B die definierte Unebenheit der Auflagefläche 92 und der Haltefläche 97 durch separate, diskrete Elemente 93 bzw. 98 mit einer kegelförmigen Ausgestaltung gebildet.

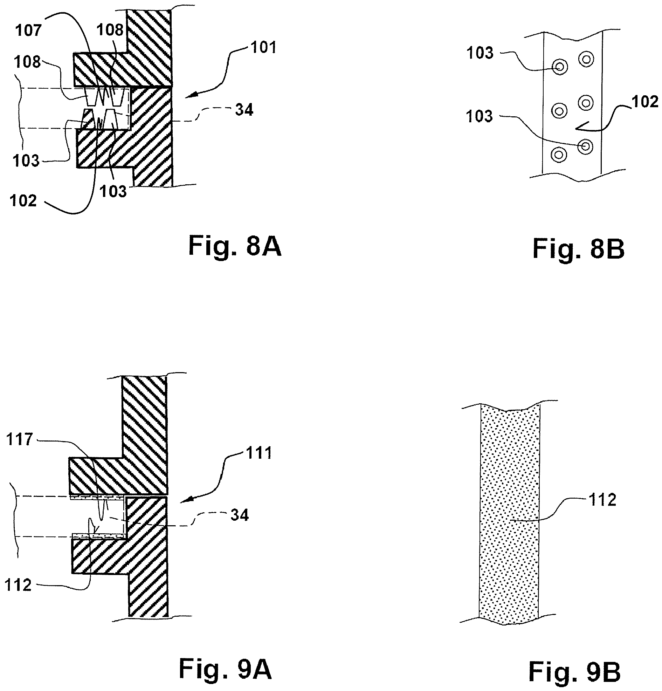

Bei der Variante der Halteeinrichtung 101 gemäss den Figuren 8A und 8B die definierte Unebenheit der Auflagefläche 102 und der Haltefläche 107 der Halteeinrichtung 101 durch separate, diskrete Elemente 103 bzw. 108, die eine kegelstumpfförmige Ausgestaltung aufweisen, gebildet.

Bei der Variante der Halteeinrichtung 111 gemäss den Figuren 9A und 9B ist die definierte Unebenheit durch eine Rauheit der Auflagefläche 112 und der Haltefläche 117 der Halteeinrichtung 111 gebildet. Die Rauheit entspricht in diesem Beispiel einer Schleifpapierkörnung von 80 nach CAMI-Standard.

Die einzelnen, im Zusammenhang mit den Figuren beschriebenen Details können selbstverständlich auch bei den anderen Ausführungsformen vorgesehen werden.

## Patentansprüche

1. Staubsauger mit einem Gehäuse (12),
mit zumindest einem Filterelement (31) zur Abscheidung von angesaugten, in einem Luftstrom (L) transportierten Partikeln (13) sowie mit einer Halteeinrichtung (41; 51; 61; 81; 91; 101; 111) zum Halten des zumindest einen Filterelementes (31) am oder im Gehäuse (12), wobei das zumindest eine Filterelement (31) zumindest einen, vorteilhaft abragenden Halteabschnitt (34) aufweist, und wobei
die Halteeinrichtung (41; 51; 61; 81; 91; 101; 111) eine Auflagefläche (42; 52; 62; 82; 92; 102; 112) und eine Haltefläche (47; 57; 67; 87; 97; 107; 117) aufweist, zwischen denen im angeordneten Zustand des Filterelementes (31) dessen Halteabschnitt (34) zu liegen kommt, **dadurch gekennzeichnet, dass**
zumindest die Auflagefläche (42; 52; 62; 82; 92; 102; 112) und/oder die Haltefläche (47; 67; 87; 97; 107; 117) der Halteeinrichtung (41; 51; 61; 81; 91; 101; 111) mit zumindest einer definierten Unebenheit versehen ist.

2. Staubsauger nach Anspruch 1, **dadurch gekennzeichnet, dass** die Auflagefläche (42; 62; 82; 92; 102; 112) und die Haltefläche (47; 67; 87; 97; 107; 117) der Halteeinrichtung (41; 61; 81; 91; 101; 111) jeweils mit zumindest einer definierten Unebenheit versehen sind.

3. Staubsauger nach Anspruch 2, **dadurch gekennzeichnet, dass** die definierte Unebenheit an der Auflagefläche (42; 62; 82; 92; 102; 112) und an der Haltefläche (47; 67; 87; 97; 107; 117) der Halteeinrichtung (41; 61; 81; 91; 101; 111) gleichartig oder ungleichartig ausgebildet ist.

4. Staubsauger nach einem der vorhergehenden Ansprüche, **dadurch gekennzeichnet, dass** die definierte Unebenheit der Auflagefläche (42; 52; 62; 82; 92; 102) und/oder der Haltefläche (47; 67; 87; 97; 107) der Halteeinrichtung (41; 51; 61; 81; 91; 101) durch zumindest eine Erhebung gebildet ist.

5. Staubsauger nach einem der vorhergehenden Ansprüche, **dadurch gekennzeichnet, dass** die Halteeinrichtung (41; 51; 61; 81; 91; 101; 111) an einen von dem Luftstrom (L) durchströmten Gehäuseabschnitt (24) vorgesehen ist und zumindest die Auflagefläche (42; 52; 62; 82; 92; 102; 112) diesen Gehäuseabschnitt (24) entlang dessen Umfang umgibt, wobei die einzelnen Abschnitte der Auflagefläche (42; 52; 62; 82; 92; 102; 112) jeweils eine entlang der Innenöffnung des Gehäuseabschnitts (24) verlaufende Längserstreckung aufweisen.

6. Staubsauger nach Anspruch 4 oder 5, **dadurch gekennzeichnet, dass** die zumindest eine Erhebung wenigstens eine Rippe (43, 48; 52; 73, 74) umfasst, welche vorteilhaft entlang der Längserstreckung der Auflagefläche (42; 52; 62) ausgerichtet ist.

7. Staubsauger nach Anspruch 6, **dadurch gekennzeichnet, dass** die zumindest eine Erhebung mehrere Rippen (43, 48; 52; 73, 74) umfasst, die vorzugsweise in einem Winkel zur Längserstreckung der Auflagefläche (52; 62) ausgerichtet sind, wobei der Winkel zur Längserstreckung vorteilhaft 1° bis 89° und besonders vorteilhaft 40° bis 50° beträgt.

8. Staubsauger nach Anspruch 7, **dadurch gekennzeichnet, dass** eine erste Gruppe von Rippen (73), die in eine erste Richtung ausgerichtet sind, und eine zweite Gruppe von Rippen (74) vorgesehen sind, die in eine zweite, von der ersten Richtung verschiedenen Richtung ausgerichtet sind.

9. Staubsauger nach Anspruch 7 oder 8, **dadurch gekennzeichnet, dass** die einzelnen Rippen (43, 48; 52; 73, 74) vorteilhaft parallel zueinander verlaufen.

10. Staubsauger nach einem der vorhergehenden Ansprüche, **dadurch gekennzeichnet, dass** die definierte Unebenheit der Auflagefläche (82) und/oder der Haltefläche (87) der Halteeinrichtung (81; 91; 101) durch mehrere Erhebungen gebildet ist, welche als separate, diskrete Elemente (83, 88; 93, 98; 103, 108) ausgebildet sind.

11. Staubsauger nach Anspruch 10, **dadurch gekennzeichnet, dass** die separaten, diskreten Elemente (83, 88; 93, 98; 103, 108) entlang der Auflagefläche (82) und/oder der Haltefläche (87) der Halteeinrichtung (81; 91; 101) in einem gleichmässigen Raster angeordnet sind.

12. Staubsauger nach Anspruch 10 oder 11, **dadurch gekennzeichnet, dass** die separaten, diskreten Elemente (83, 88; 93, 98; 103, 108) eine teilkugelige, zylinderförmige, keglige und/oder kegelstumpfförmige Ausgestaltung aufweisen.

13. Staubsauger nach einem der Ansprüche 1 bis 4, **dadurch gekennzeichnet, dass** die die definierte Unebenheit durch eine Rauhheit der Auflagefläche (112) und/oder der Haltefläche (117) der Halteeinrichtung (111) gebildet ist, wobei die Rauheit vorteilhaft einer Schleifpapierkörnung von 6 bis 450, besonders vorteilhaft von 40 bis 150, ganz besonders vorteilhaft von 80, entspricht.

14. Staubsauger nach einem der Ansprüche 1 bis 4, **dadurch gekennzeichnet, dass** ein separates Unebenheitselement (71) vorgesehen ist, das an zumindest einer Seite (72) die definierte Unebenheit aufweist und an der Auflagefläche (62) und/oder an der Haltefläche (67) der Halteeinrichtung (61) festlegbar ist.

15. Staubsauger nach einem der vorhergehenden Ansprüche, **dadurch gekennzeichnet, dass** der Staubsauger (11) einen Aufnahmebehälter (14) zur Aufnahme und zumindest temporären Lagerung der angesaugten Partikel (13) sowie einen auf dem Aufnahmebehälter (14) anordnenbaren Saugkopf (15) aufweist, wobei die Auflagefläche (42) oder die Haltefläche der Halteeinrichtung (41) an dem Aufnahmebehälter (14) und die Haltefläche (47) oder die Auflagefläche der Halteeinrichtung (41) an dem Saugkopf (15) vorgesehen sind.
